# EUROPEAN PATENT APPLICATION

(11) **EP 4 023 382 A1**
(43) Date of publication of application: **06.07.2022**
(21) Application number: 21205114.8
(22) Date of filing: 27.10.2021
(51) Int. Cl.: B23K 9/095, B23K 9/173, B23K 9/29, B23K 9/32

(54) **WELD MONITORING SYSTEM USING RETRACTABLE CORD, METHOD OF MONITORING A TRAVEL SPEED, TRAVEL DIRECTION OR TRAVEL DISTANCE OF A WELDING TOOL**

(30) Priority: 28.10.2020 US 202063106424 P; 22.10.2021 US 202117508588
(71) Applicant: Illinois Tool Works Inc., Glenview, IL 60025 (US)
(72) Inventor: BECKER, William Joshua, Glenview 60025 (US); RAPPL, James Francis, Glenview 60025 (US)
(74) Representative: HGF

(57) **Abstract**

Described herein are examples of torch tracking systems (200) that monitor travel directions, speeds, and/or distances of welding torches (104) using retractable cords (204). In some examples, the torch tracking systems use a sensor to measure a speed at which a reel (202) extends and/or retracts a cord (204), and/or measure a length of the cord (204) that is extended and/or retracted. The reel (202) or cord (204) can be attached to some portion of the welding torch (104), such that movement of the torch (104) away from the reel (202) causes the reel (202) to extend more cord (204), and movement towards the reel (202) allows a spring loaded spool of the reel (202) to automatically retract the cord (204). While reel (202) based torch tracking systems (200) may provide coarser tracking than the more complex and/or expensive torch tracking solutions, their simplicity and low cost may make them an attractive alternative.

## Description

### CROSS REFERENCE TO RELATED APPLICATIONS

This application claims the benefit of U.S. Provisional Patent Application No. 63/106,424, filed October 28, 2020, and titled "TRACKING WELDING TORCHES USING RETRACTABLE CORDS," the contents of which are hereby incorporated by reference in their entirety.

### TECHNICAL FIELD

The present disclosure generally relates to welding torches and, more particularly, to tracking welding torches using retractable cords.

### BACKGROUND

Quality welding requires proper welding technique. In particular, the way in which an operator manipulates a welding torch while welding can have a significant impact on the quality of a weld. Proper torch manipulation can lead to high quality welds, while poor torch manipulation can result in poor quality welds.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to tracking welding torches using retractable cords, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows a welding system, in accordance with aspects of this disclosure.
FIG. 2 shows a torch tracking system, in accordance with aspects of this disclosure.
FIGS. 3a-3g show examples of one or more reels of the torch tracking system of FIG. 2 being used with a torch of the welding system of FIG. 1, in accordance with aspects of this disclosure.
FIG. 4 is a flow diagram illustrating an example operation of a torch tracking program, in accordance with aspects of this disclosure.
FIG. 5 is an example of an alternative reel that may be used with the torch tracking system of FIG. 2, in accordance with aspects of this disclosure.
FIG. 6 is an example of a drive roll system that may be used with the torch tracking system of FIG. 2, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to torch tracking systems that measure and/or monitor a travel speed, travel distance, and/or travel direction of a welding torch using a reel with a retractable (and/or extendable) cord. The reel or cord can be attached to some portion of the welding torch, such that movement of the torch away from the reel causes the reel to extend more cord, and movement towards the reel allows a spring loaded spool of the reel to automatically retract the cord. The torch tracking systems may use a sensor to measure a speed at which a reel extends and/or retracts the cord, and/or measure a length of the cord that is extended and/or retracted. The torch tracking systems may use the measured speed of the reel and/or length of the cord to determine the travel speed, travel distance, and/or travel direction.

While some torch tracking solutions do exist, the solutions are typically complex and expensive. In contrast, the example reel based torch tracking systems disclosed herein are simple, low cost solutions. While reel based torch tracking systems may provide coarser tracking than the more complex and/or expensive torch tracking solutions, their simplicity and low cost may make them an attractive alternative.

Some examples of the present disclosure relate to a weld monitoring system, comprising a reel configured to extend and retract a cord that is spooled on the reel; a sensor configured to measure a speed at which the cord is extended or retracted, or a length of the cord that is extended or retracted; and control circuitry configured to determine a travel speed, travel direction, or travel distance of a welding tool that is coupled to the reel or the cord based on the speed or length measured by the sensor.

In some examples, the reel or an end of the cord comprises a weight configured to anchor the reel or the end of the cord. In some examples, the reel or an end of the cord comprises a coupler configured to secure the reel or the end of the cord to a workpiece, a fixture, or the welding torch. In some examples, the coupler comprises a magnet, clip, clasp, clamp, bracket, hook and loop fastener, screw, bolt, nail, or strap, or a hole.

In some examples, the sensor comprises a gyroscope, accelerometer, potentiometer, encoder, magnetic sensor, or optical sensor. In some examples, the welding tool comprises a welding gun, welding torch, or electrode holder. In some examples, the weld monitoring system further comprises a user interface (UI) configured to provide an output indicative of the travel speed, travel direction, or travel distance. In some examples, the weld monitoring system further comprises a welding helmet, wherein the welding helmet comprises the control circuitry, the UI, and communication circuitry configured to receive a signal from the sensor indicative of the speed or length. In some examples, the control circuitry is further configured to determine a heat input based on the travel speed. In some examples, the cord is a welding cable that connects the welding tool to a welding-type power supply, wire feeder, or gas supply.

Some examples of the present disclosure relate to a method of monitoring a travel speed, travel direction, or travel distance of a welding tool, the method comprising: measuring a speed at which a cord is extended or retracted by a reel, or a length of the cord that is extended or retracted, via a sensor; determining, via control circuitry, a travel speed, travel direction, or travel distance of the welding tool based on the speed or length measured by the sensor, the welding tool being coupled to the reel or the cord.

In some examples, the reel or an end of the cord comprises a weight configured to anchor the reel or the end of the cord. In some examples, the reel or an end of the cord comprises a coupler configured to secure the reel or the end of the cord to a workpiece, a fixture, or the welding torch. In some examples, the coupler comprises a magnet, clip, clasp, clamp, bracket, hook and loop fastener, screw, bolt, nail, or strap, or a hole.

In some examples, the sensor comprises a gyroscope, accelerometer, potentiometer, encoder, magnetic sensor, or optical sensor. In some examples, the welding tool comprises a welding gun, welding torch, or electrode holder. In some examples, the method further comprises providing an output indicative of the travel speed, travel direction, or travel distance via a user interface (UI).

In some examples, the method further comprises receiving, via communication circuitry of a welding helmet, a signal from the sensor indicative of the speed or length, wherein the welding helmet also comprises the control circuitry and the UI. In some examples, the control circuitry is further configured to determine a heat input based on the travel speed. In some examples, the cord is a welding cable that connects the welding tool to a welding-type power supply, wire feeder, or gas supply.

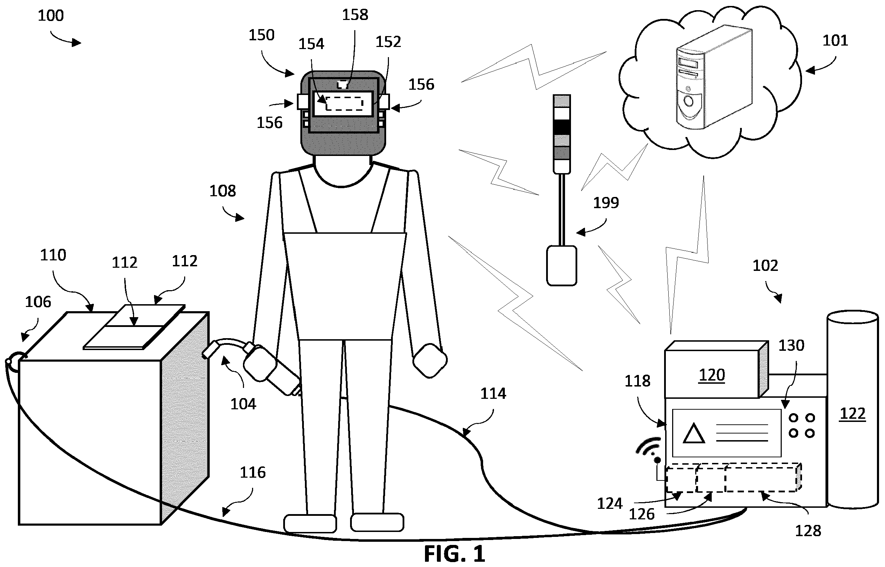

FIG. 1 shows an example of a welding system 100. As shown, the welding system 100 includes welding equipment 102, a welding torch 104, a work clamp 106, and a stack light 199. As shown, the work clamp 106 is attached to a welding bench 110. In some examples, the work clamp 106 may instead be coupled to a workpiece 112.

In the example of FIG. 1, the welding torch 104 and work clamp 106 are coupled to the welding equipment 102. As shown, the clamp 106 is coupled to the welding equipment 102 via a clamp cable 116, and the welding torch 104 is coupled to the welding equipment 102 via a welding cable 114. As shown, the welding torch 104 is a welding gun configured for gas metal arc welding (GMAW). In some examples, the welding torch 104 may comprise a gun configured for flux-cored arc welding (FCAW), a torch configured for gas tungsten electrode welding (GTAW), or an electrode holder configured for shielded metal arc welding (SMAW). In some examples, the welding system 100 may be configured for welding simulations (e.g., for weld training) and/or the welding torch 104 may be a mock welding torch configured for use in welding simulations.

In the example of FIG. 1, an operator 108 is handling the welding torch 104 near a welding bench 110 that supports two workpieces 112. As shown, the operator 108 is wearing a welding helmet 150. In the example of FIG. 1, the welding helmet 150 comprises a helmet shell that retains a faceplate 152. In some examples, the faceplate 152 is at least partially transparent, to allow an operator to see through the faceplate 152.

In the example of FIG. 1, an internal surface of the faceplate 152 (and/or the welding helmet 150) is outfitted with a display screen 154. In some examples, the display screen 154 is a near-eye display. In some examples, the display screen 154 is transparent or semi-transparent, so as to allow the operator to see through the display screen 154 and faceplate 152. In some examples, the display screen 154 may overlap all, a portion, or none of the internal surface of the faceplate 152. In some examples, the display screen 154 may instead be coupled to an internal surface of the helmet shell, so as to not obstruct the faceplate 152.

In the example of FIG. 1, the welding helmet 150 further includes a helmet interface 156. In some examples, the helmet interface 156 may comprise several helmet inputs and/or helmet outputs. In some examples, the helmet inputs may include, for example, knobs, buttons, levers, switches, touch screens (e.g., a touch display screen 154), microphones, and/or other input devices. In some examples, helmet outputs may include, for example, lights, speakers, the display screen 154, haptic devices, and/or other output devices.

In the example of FIG. 1, the welding helmet 150 further includes helmet circuitry 158. In some examples, the helmet circuitry 158 may include interconnected memory circuitry, processing circuitry, communication circuitry, interface circuitry (e.g., that drives the helmet interface 156), and/or other appropriate circuitry. In some examples, the helmet circuitry 158 may communicate with the welding equipment 102, welding torch 104, remote server(s) 101, stack light 199, and/or other devices. For example, the helmet circuitry 158 may receive one or more signals from the welding equipment 102 and/or welding torch 104 representative of certain welding parameters (e.g., voltage, current, program number, 2T/4T trigger lock settings, etc.), and output those welding parameters to the operator 108 (e.g., via the helmet interface 156). As another example, the helmet circuitry 158 may transmit one or more signals representative of inputs received via the helmet interface 156 (e.g., to control the welding parameters) to the welding torch 104 and/or welding equipment 102.

In some examples, the torch 104 may be used as part of the helmet interface 158. For example, the torch 104 may include communication circuitry configured to communicate with the helmet circuitry 158 to allow the torch 104 to act as an input device of the helmet interface 156 and assist, for example, in navigation through interface menus and/or control of welding parameters. In some examples, the torch 104 may be configured to communicate with the welding equipment 102 (e.g., via cable 114) to control welding parameters. In some examples, the torch 104 may be disabled from welding when being used as part of the helmet interface 156 and/or to control welding parameters of the welding equipment 102.

In some examples, the torch 104 may include one or more sensors. For example, the torch 104 may include one or more voltage and/or current sensors configured to measure a current through an electrode of the torch 104 and/or a voltage potential at the torch 104. In some examples, the torch 104 may be configured to communicate the current and/or voltage to the helmet 150, welding equipment 102, remote server(s) 101, stack light 199, and/or other devices.

In the example of FIG. 1, the welding equipment 102 comprises a welding-type power supply 118, wire feeder 120, and gas supply 122. In some examples, the gas supply 122 may be configured to supply shielding gas to the welding torch 104 (e.g., via line 212). In some examples, the wire feeder 120 may be configured to feed a wire electrode to the welding torch 104. While shown as connected to the power supply 118 in FIG. 1, in some examples, the gas supply 122 and/or wire feeder 120 may instead be entirely from the power supply 118, or integrated into the power supply 118.

In the example of FIG. 1, the welding-type power supply 118 includes communication circuitry 124, control circuitry 126, and power conversion circuitry 128 interconnected with one another. As shown, the welding-type power supply 118 also includes an operator interface 130. In some examples, the operator interface 130 may include several inputs and/or outputs, such as for example, displays, speakers, lights, microphones, touch screens, knobs, levers, buttons, switches, and/or other input and/or output devices. While not shown for the sake of clarity, in some examples, the operator interface 130 may be electrically connected to the control circuitry 126 and/or communication circuitry 124.

In some examples, the communication circuitry 124 may be configured for communication with external devices (e.g., one or more remote server(s) 101, the welding torch 104, the welding helmet 150, the stack light 199, etc.). In some examples, the power conversion circuitry 128 may be configured to receive input power (e.g., from a generator, a battery, mains power, etc.) and convert the input power to welding-type output power, such as might be suitable for use by the welding torch 104 for welding-type operations, for example. In some examples, the control circuitry 126 may be configured to control operation of the communication circuitry 124, power conversion circuitry 128, wire feeder 120, and/or gas supply 122 (e.g. via one or more control signals). In some examples, the control circuitry 126 may control operation of the communication circuitry 124, power conversion circuitry 128, wire feeder 120, and/or gas supply 122 according to one or more parameters, commands, and/or inputs (e.g., provided to the operator interface 130 and/or communicated by the welding helmet 150).

While shown as part of the welding-type power supply 118 in the example of FIG. 1, in some examples, the communication circuitry 124, control circuitry 126, and/or operator interface 130 may instead, or additionally, be part of the wire feeder 120. In some examples, the control circuitry 126 may include one or more sensors. For example, the control circuitry 126 may include one or more current sensors configured to measure a current flowing to/from the power conversion circuitry 128, welding torch 104, and/or work clamp 106. As another example, the control circuitry 126 may include one or more voltage sensors configured to measure a voltage across the welding cable 114 and clamp cable 116.

In some examples, the stack light 199 may comprise a variety of different (e.g., color, shape, size, etc.) lights controlled via associated control circuitry of the stack light 199. In some examples, the stack light 199 may further comprise communication circuitry configured to facilitate communication of the stack light 199 with other devices of the welding system 100 (e.g., the welding torch 104, welding helmet 150, welding equipment 102, remote server(s) 101, etc.). In some examples, control circuitry of the stack light 199 may control illumination of the different lights based on one or more signals received from one or more external devices via the communication circuitry.

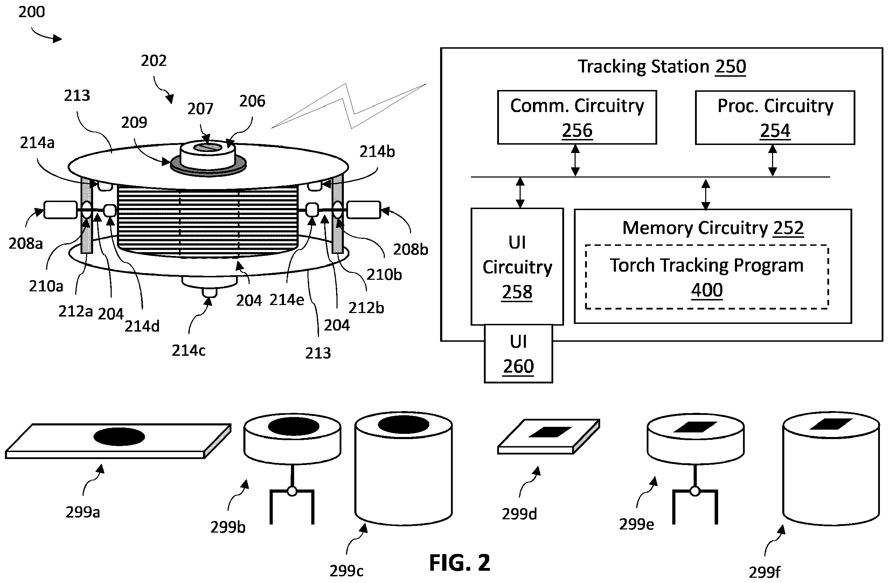

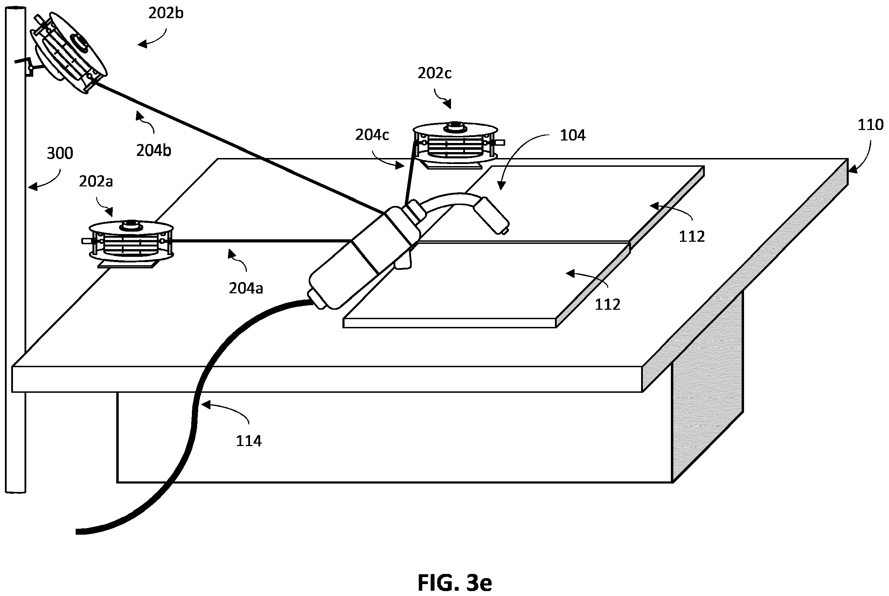

FIG. 2 shows an example of a torch tracking system 200. As shown, the torch tracking system 200 includes a reel 202, several reel attachments 299, and a tracking station 250. While only one reel 202 is shown in the example of FIG. 2 for the sake of simplicity, in some examples the torch tracking system 200 may include multiple reels 202 (see, e.g., FIG. 3e).

In the example of FIG. 2, the reel 202 includes a cord 204 that is wound onto a spool 206 of the reel 202. In some examples, the cord 204 may be comprised of electrically conductive material. In some examples, the reel 202 may include two or more cords 204 and/or two or more spools 206. In some examples, the cord 204 may be configured for attachment to a welding torch 104.

In some examples, the spool 206 is spring loaded such that a spring force biases the spool 206 towards rotation in a certain direction. In some examples, this spring force provides a retraction force that will automatically retract cord 204 that has been unwound from the spool 206 back onto the spool 206, unless opposed by an equally strong opposing force. The spring/retraction force of the spool 206 ensures that the spool 206 moves (e.g., rotates) both when an end 208 of the cord 204 moves farther from the spool 206 and closer to the spool 206.

In the example of FIG. 2, the spool 206 has a tensioner adjuster 207 configured to adjust the tension of the spring in the spring loaded spool 206. (e.g., by loosening or tightening an embedded spring). As shown, the tensioner adjuster 207 is a screw. In some examples, the tensioner adjuster 207 may be differently implemented. In some examples, the spring force/bias/tension may be increased and/or decreased by adjusting the tensioner adjuster 207 (e.g., via a screw driver).

In some examples, the spring tension may be set and/or adjusted (e.g., via the tension adjuster) based on a target travel speed of a welding torch 104. For example, the spring tension may be set relatively high if a target travel speed for a particular welding operation is relatively low, and relatively low if the target travel speed is relatively high. In an example where the spring tension is set high, the operator 108 may find it relatively difficult to move the welding torch 104 quickly (e.g., at a high travel speed) with the reel cord 204 tied to the welding torch 104, due to the high spring tension of the spool 206 of the reel 202 (assuming the operator 108 is moving the welding tool 104 away from the reel 202). In an example where the spring tension is set low, the operator 108 may find it easier to move the welding torch 104 quickly (e.g., at a high travel speed) due to the low spring tension of the spool 206 of the reel 202 (assuming the operator 108 is moving the welding tool 104 away from the reel 202).

In some examples, the tensioner adjuster 207 may be configured to automatically adjust the spring force/bias/tension in response to one or more signals (e.g., sent by the helmet 150, welding equipment 102, tracking station 250, etc.). In some examples, the tensioner adjuster 207 may be motorized to enable automatic adjustment. In some examples, the tensioner adjuster 207 may comprise communication circuitry to enable the tensioner adjuster 207 to receive one or more signals.

In the example of FIG. 2, the reel 202 further includes a spool motor 209 in communication with the spool 206. In some examples, the spool motor 209 may be configured to apply a rotational force to the spool 206 in a particular direction, to help unwind or retract cord 204. In some examples, the rotational force applied by the spool motor 209 may increase or decrease the tension in the cord 204, and/or effectively increase or decrease the spring force of the spool 206 (e.g., depending on the direction of the force).

In some examples, the spool motor 209 may be configured to apply the rotational force in response to one or more signals (e.g., sent by the helmet 150, welding equipment 102, tracking station 250, sensors 214, etc.). In some examples, the spool motor 209 may be configured to automatically adjust the tensioner adjuster 207 in response to one or more signals. In some examples, the spool motor 209 may comprise communication circuitry to receive the one or more signals, and/or control circuitry to determine what adjustments to make based on the signal(s).

By dynamically activating the spool motor 209 via one or more signals, the tension in the cord 204 and/or spring force of the spool 206 may be dynamically adjusted. In some examples, dynamic adjustment of the spring force/tension of the spool 206 and/or tension of the cord 204 may enable (e.g., travel speed) feedback to be delivered to the operator 108 during a welding operation (e.g., by making it harder or easier for an operator 108 to move the welding torch 104). In some examples, the spool motor 209 may be configured to maintain a certain target tension in the cord 204, and may dynamically adjust the tension in the cord 204 to maintain the target tension (e.g., based on one or more tension sensor signals).

In the example of FIG. 2, the cord 204 has a first end 208a and a second end 208b. As shown, each end 208 of the cord 204 terminates in a fitting. In some examples, the fitting may be electrically conductive. The cord 204 leading to the end 208 is extended through an aperture 210 in a bracket 212 of the reel 202 that is connected to opposing flanges 213 of the reel 202. The apertures 210 of the bracket 212 are smaller than the fittings on each end 208 of the cord 204, so that the cord 204 cannot be completely retracted onto the spool 206 (and/or completely removed from the reel 202). In some examples, one of the ends 208 of the cord 204 may instead be attached to the spool 206 (or other part of the reel 202) to prevent complete removal of the cord 204 from the reel 202. In some examples, two (or more) cords 204 (and/or spools 206) may be used, with two (or more) ends 208 of the cords 204 being extended through the apertures 210 of the brackets 212, while their opposite ends 208 are attached to the spool(s) 206 (and/or reel 202). In some examples, some other mechanism(s) may be used to prevent the cord 204 from being completely removed away from the reel 202, or completely retracted onto the spool 206.

In the example of FIG. 2, the reel 202 includes several sensors 214. While five sensors 214 are shown in the example of FIG. 2, in some examples, the reel 202 may include more or fewer sensors 214. Though not shown for the sake of simplicity, in some examples, the reel 202 may include a power source (e.g., battery) to provide power to the sensors 214.

In some examples, one or more of the sensors 214 may be configured to measure how much and/or how fast cord 204 is extended from and/or retracted onto the spool 206. In some examples, one or more of the sensors 214 may be configured to measure a tension in/of the cord 204. In some examples, one or more of the sensors 214 may be configured to measure properties of the reel 202 and/or cord 204 that can be used to determine how much and/or how fast cord 204 is extended from and/or retracted onto the spool 206.

For example, the sensor 214a may be configured to measure a length (and/or change in length) of cord 204 that is extended from and/or retracted onto the spool 206 through aperture 210a, and/or a speed at which the cord 204 is extended from and/or retracted onto the spool 206 through aperture 210a. As another example, the sensor 214b may be configured to measure a length (and/or change in length) of cord 204 extended from and/or retracted onto the spool 206 through aperture 210b, and/or a speed at which the cord 204 is extended from and/or retracted onto the spool 206 through aperture 210a. As another example, the sensor 214c may be configured to measure a direction of rotation of the spool 206, a number of rotations of the spool 206 (e.g., total and/or over a time period), and/or a rotation speed of the spool 206.

In some examples, the measured speeds, rotations, and/or changes in length may indicate a direction using positive or negative values. In some examples, the measurements may be direction agnostic, and reported as a magnitude. In some examples, each sensor 214 may comprise one or more tachometers, gyroscopes, accelerometers, potentiometers, encoders, magnetic sensors, optical sensors (and/or optical sources), tension sensors, hall effect sensors, and/or other appropriate sensors. In some examples, the reel 202 may include one or more magnets, optical sources, and/or markings to assist the sensors 214 in their measurements and/or detections. In some examples, the cord 204 may include (e.g., magnetic, pattern, reflective, etc.) markings to assist the sensors 214 in their measurements and/or detections.

In some examples, one or more of the sensors 214 may comprise a voltage sensor and/or current sensor. For example, the sensor 214 may be configured to measure a voltage across the two ends 208 of the cord 204, or the voltage across one end 208 of the cord 204 and a portion of the reel 202 (e.g., the flange 213 or spool 206). As another example, the sensor 214 may be configured to measure a current through the cord 204 and/or the reel 202.

In some examples, each sensor 214 may comprise communication circuitry configured to send one or more sensor signals representative of the measurements of the sensor(s) 214 to a tracking station 250 and/or other sensor 214. The tracking station 250 may thereafter determine how much and/or how fast cord 204 is extended from and/or retracted onto the spool 206 based on the measurements. In some examples, one or more of the sensors 214 may comprise processing circuitry configured to determine how much and/or how fast cord 204 is extended from and/or retracted onto the spool 206 based on its own measurements and/or measurements of other sensors 214. In some examples, a sensor 214 may perform some intermediate determinations using its processing circuitry, and then send one or more sensor signals representative of these intermediate determinations to the tracking station 250 and/or other sensor 214 for further processing.

In some examples, the sensor(s) 214 and/or tracking station 250 may send one or more signals representative of their measurement(s) and/or determination(s) to the spool motor 209 and/or tensioner adjuster 207. In some examples, the spool motor 209 and/or tensioner adjuster 207 may adjust the spring tension in the spool 206 and/or apply rotational force to the spool 206 in response to (and/or based on) the signal(s), such as, for example, to provide feedback and/or maintain a target tension in the cord 204.

In the example of FIG. 2, the torch tracking system 200 further includes various reel attachments 299. In some examples, the reel attachments 299 may be comprised of electrically conductive material. In some examples, a reel attachment 299 may anchor and/or secure the reel 202 and/or an end of the cord 204 so that the spool 206 will turn and the cord 204 will be unwound when a welding torch 104 (e.g., attached to the reel 202 or an opposite end 208 of the cord 204) is moved. In some examples, a reel attachment 299 may comprise one or more magnets, clamps, clips, clasps, brackets, hook and loop fasteners, bolts, screws, nails, straps, and/or other appropriate mechanisms.

In some examples, a reel attachment 299 may be coupler configured to secure the reel 202 and/or an end 208 of the cord 204 to a fixture (e.g., the welding bench 110, a pillar, a table, the wall, etc.), welding torch 104, and/or a workpiece 112. In the example of FIG. 2, reel attachment 299a is a coupler plate configured to attach to the reel 202 (e.g., via a protrusion of the spool 206). Reel attachment 299d is a coupler plate configured to attach to a fitting at the end 208 of the cord 204. In some examples, a coupler plate may be magnetic and/or be fitted with one or more fasteners to allow attachment to a fixture and/or workpiece. In the example of FIG. 2, reel attachment 299b and reel attachment 299e are couplers configured for attachment to the reel 202 and end 208 of the cord 204, respectively. As shown, the couplers are fitted with clamps, though, in some examples, they may instead be fitted with clips, clasps, brackets, straps, and/or other appropriate coupling mechanisms. In the example of FIG. 2, reel attachment 299c and reel attachment 299fs are weights configured to attach to and anchor the reel 202 and end 208 of the cord 204, respectively. In some examples, the reel 202 may need no extra attachment 299 to secure the reel 202 and/or end 208 of the cord 204, and instead a space, aperture, and/or hole of the reel and/or cord 204 may be used to secure the reel 202 to a fixture, welding torch 104, and/or workpiece 112.

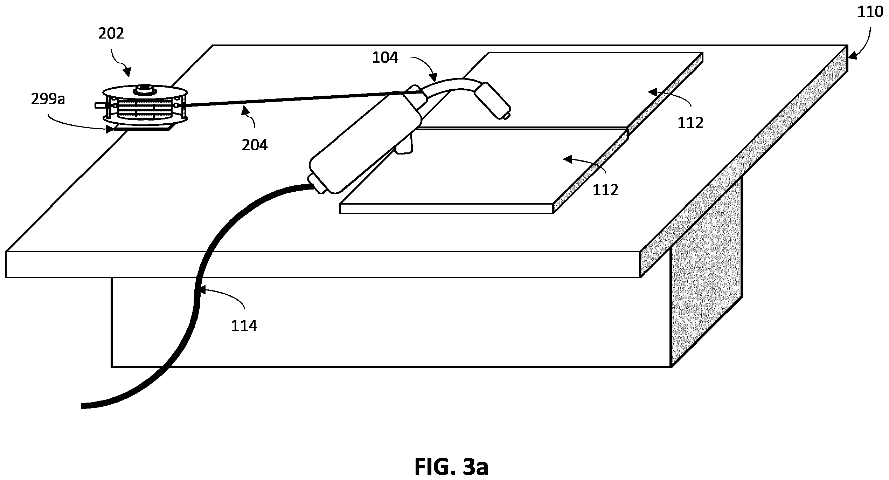

FIGS. 3a-3g show different examples of the reel 202 attached to a welding torch 104. In the example of FIG. 3a, one end 208 of the cord 204 of the reel 202 is attached to the welding torch 104, and the reel 202 itself is secured to the welding bench 110 via reel attachment 299a. As shown, the cord 204 is attached to a neck of the welding torch 104, such as by simple tying, for example. In some examples, the cord 204 may instead be attached to a different part of the welding torch 104, such as a handle, contact tip, or nozzle of the welding torch 104, for example. In some examples, the cord 204 may be attached to the welding torch 104 via a reel attachment 299.

In some examples, the attachment of the cord 204 to the welding torch 104 may prevent the cord 204 from being retracted by spring biased spool 206 of the reel 202 when the torch 104 is held stationary. In some examples, the grip of the operator 108 holding the torch 104 may have sufficient force to oppose the spring force of the spool 206 and prevent retraction. In some examples, the retracting (e.g., spring) force of the spool 206 (and/or additional rotational force applied to the spool 206) may be significant enough to induce or encourage movement towards the reel 202.

In some examples, the attachment of the cord 204 to the welding torch 104 may also result in more cord 204 being unwound from the reel 202 when the welding torch 104 is moved away from the reel 202. In some examples, the attachment of the cord 204 to the welding torch 104 may result in cord 204 being retracted by the reel 202 when the welding torch 104 is moved towards the reel 202. In this way, when the welding torch 104 moves towards or away from the reel 202, the cord 204 will either be extended or retracted, and the amount of cord 204 extended/retracted, and/or the speed of extension/retraction, may be indicative and/or directly proportional to the travel speed, direction, and/or distance of the welding torch 104.

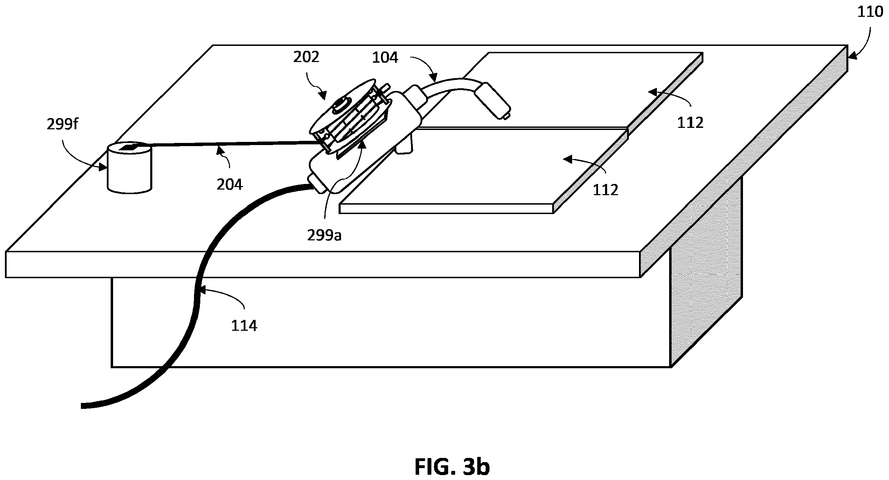

In the example of FIG. 3b, a different arrangement is shown, where the reel 202 is instead coupled to the welding torch 104 via reel attachment 299a, and an end 208 of the cord 204 is anchored to the welding bench 110 by reel attachment 299f. In some examples, the reel 202 may instead be integrated directly into the welding torch 104. Though not shown, in some examples, the reel 202 and/or an end 208 of the reel 202 may be put into electrical communication with one or more portions of the welding torch 104 that receive power from the welding equipment 102 so that the reel 202 can measure voltage and/or current.

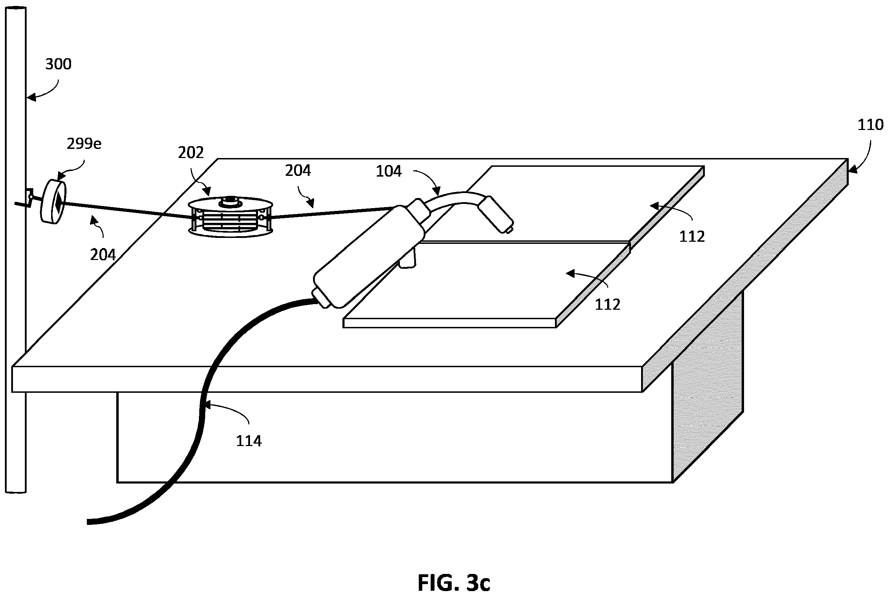

FIG. 3c shows an example where one end 208 of the cord 204 is secured to a pillar 300 via reel attachment 299e and the other end 208 of the cord 204 is secured to the welding torch 104, while the reel 202 is unsecured in between. In some examples, the end 208 of the cord secured to the welding torch 104 may be secured to one or more portions of the welding torch 104 that receive power from the welding equipment 102, so that the reel 202 can measure voltage and/or current. While the examples of FIGS. 3a-3c show particular reel attachments 299 used for example purposes, in some examples other reel attachment 299 may be used.

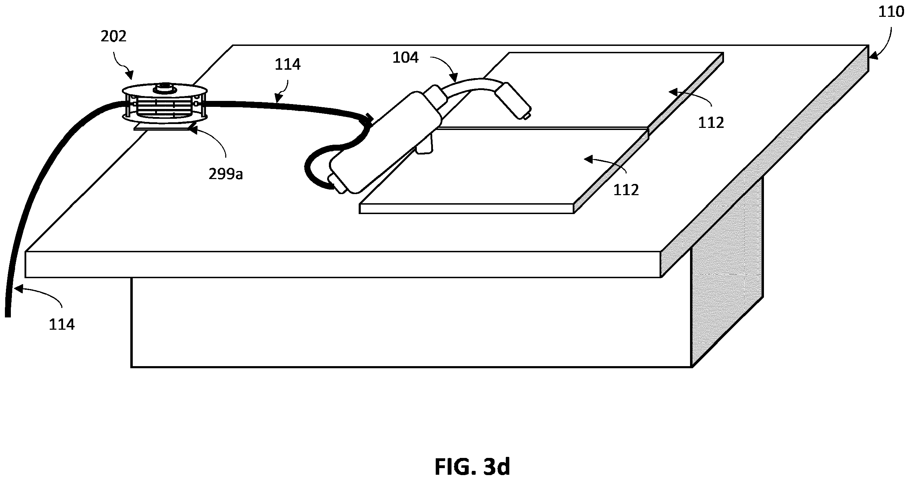

FIG. 3d shows another example arrangement where the welding cable 114 connecting the welding torch 104 to the welding equipment 102 is used as a cord. In the example of FIG. 3d, one end of the welding cable 114 is attached to the welding torch 104 and a second end extends off the page (e.g., to the welding equipment 102), while the intermediate welding cable 114 is wound about the spool 206. In some examples, some portion of the welding cable 114 may also be attached to the spool (e.g., via hook and loop fastener). This arrangement may be beneficial in that no extra cord 204 is required. However, the arrangement may require a larger reel 202 to accommodate the welding cable 114 and, may risk damage to the welding cable 114 due to the winding and/or unwinding of the welding cable 114 via the reel 202.

FIG. 3e shows another example arrangement where three reels 202 are used instead of just one reel 202. As shown, reel 202a is secured to the left side of welding bench 110, similar to the reel 202 shown in FIG. 3a. Reel 202b is secured to the pillar 300 at an elevation some distance above reel 202a. Reel 202c is secured to a front side of the welding bench 110. In some examples, this arrangement may help the torch tracking system 200 make more precise determinations about the position of the torch 104. For example, with a known distance from three different reels 202 positioned at three different locations, whose vertices form a triangle, a triangulation algorithm of sorts may be used to pinpoint a more precise location of the welding torch 104. While three reels 202 are shown in the example of FIG. 3e, in some examples two reels 202 may still enable the torch tracking system 200 to perform more precise positioning (e.g., in two dimensions) than when a single reel 202 is used.

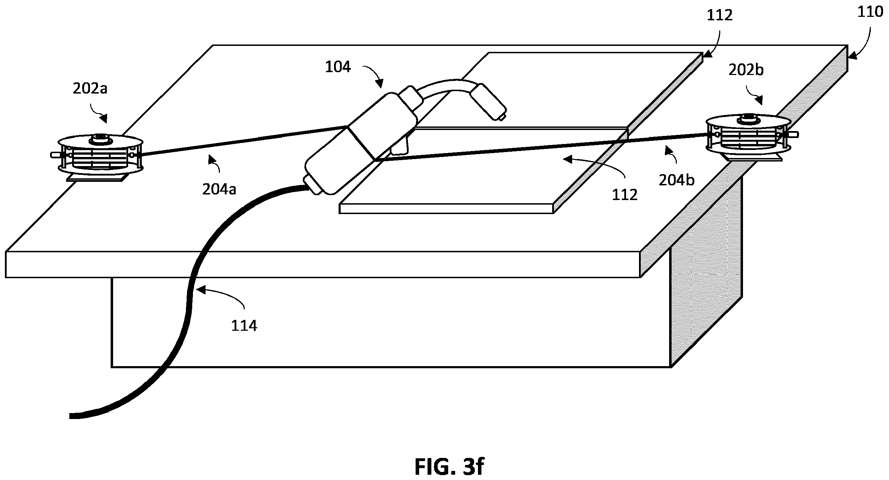

FIG. 3f shows another example arrangement where two reels 202 are used. As shown, a first reel 202a is secured to the left side of welding bench 110, similar to the reel 202 shown in FIG. 3a, and the reel 202a shown in FIG. 3e. A second reel 202b is secured the right side of the welding bench 110, opposite the first reel 202a. The cords 204 of both reels 202 are attached to the welding torch 104.

In some examples, the two reel 202 arrangement of FIG. 3f may help the torch tracking system 200 provide better travel speed feedback to a welding operator 108 than the one reel 202 arrangement of FIG. 3a. While one reel 202 may be able to dynamically increase its spring force and/or cord tension (e.g., via tensioner adjuster 207 and/or spool motor 209) to increase the difficulty of moving the welding torch 104 away from the reel 202 quickly (e.g., at a high travel speed), decreasing the spring force and/or cord tension may not necessarily have the opposite effect (e.g., if the spring force and/or cord tension is already low). A second reel 202b, coordinated with the first reel 202a and appropriately positioned on an opposite side of the welding bench 110 (and/or weld path), may allow for the reels 202 to both push and pull at the welding torch 104, enabling the possibility of more robust feedback.

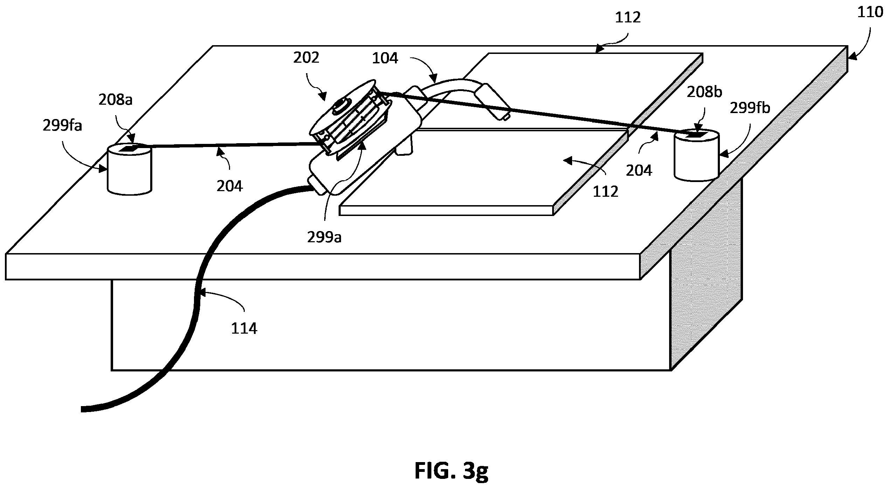

FIG. 3g shows another example arrangement that may allow for more robust feedback. In the example of FIG. 3g, a single reel 202 is coupled to the welding torch 104 via reel attachment 299a, similar to the arrangement shown in FIG. 3b. A first end 208a of the cord 204 is anchored to a left side of the welding bench 110 by a first reel attachment 299fa, similar to the arrangement shown in FIG. 3b. Unlike the arrangement shown in FIG. 3b, a second end 208b of the cord 204 (or a second end 208b of a second cord 204) is anchored to the right side of the welding bench 110. In some examples, the double anchored arrangement of FIG. 3g may enable a single reel 202 to pull the welding torch 104 in two directions, enabling the possibility of more robust feedback.

In the example of FIG. 2, the torch tracking system 200 includes a torch tracking station 250 in communication with the sensors 214 and/or spool motor 209 of the reel 202. In some examples, the torch tracking station 250 may receive one or more sensor signals from the sensors 214 of the reel 202, determine a length and/or speed of cord 204 extension/retraction, and/or determine a corresponding travel speed, direction, and/or distance of the welding torch 104 (e.g., relative to the reel 202) using the sensor signal(s). In some examples, the torch tracking station 250 may output the determined information, record the information, and/or use the information for weld monitoring purposes.

In some examples, the torch tracking system 200 may determine (e.g., load from memory circuitry 252) a target travel speed, target travel direction, and/or target tension and perform a comparison with the measured travel speed, travel direction, and/or tension sent by the sensor(s) 214. In some examples, the torch tracking system 200 may send one or more signals to the spool motor 209 based on a difference(s) between the target and measured travel speed, travel direction, and/or tension to provide feedback. For example, the one or more signals may be representative of a command to increase or decrease a rotational force applied to the spool 206 to increase/decrease the tension, and/or encourage the operator 108 to speed up or slow down the travel speed of the welding torch 104, to more closely align with the target travel speed/direction.

In some examples, some or all of the torch tracking station 250 may be implemented via the welding helmet 150, welding equipment 102, remote server(s) 101, desktop computer, mobile device (e.g., laptop, smartphone, tablet, pendant, etc.), and/or other appropriate device. In some examples, some or all of the torch track station 250 may be part of (and/or implemented by) the reel 202 itself.

In the example of FIG. 2, the torch tracking station 250 includes memory circuitry 252, processing circuitry 254, communication circuitry 256, and user interface (UI) circuitry 258 interconnected with one another via a common electrical bus. As shown, the torch tracking station 250 further includes a UI 260 connected with the UI circuitry 258. Though not shown for the sake of simplicity, the tracking station 250 may additionally include a power source to provide power to the various components of the tracking station 250.

In some examples, the UI may comprise several control inputs and/or control outputs (e.g., similar to those described above with respect to the helmet interface 156). In some examples, the UI circuitry 258 may comprise one or more drivers for the UI 260. In some examples, the UI circuitry 258 may be configured to generate one or more signals representative of input received via the UI 260. In some examples, the UI circuitry 258 may also be configured to generate one or more outputs (e.g., via the via the UI 260) in response to one or more signals (e.g., received via the bus).

In some examples, the communication circuitry 256 may include one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the communication circuitry 306 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

In some examples, the communication circuitry 256 may be configured to handle communications between the tracking station 250 and other devices internal to, and/or external of, the tracking station 250. For example, the communication circuitry 256 may receive one or more signals (e.g., from the welding equipment 102, torch 104, sensor(s) 214, remote server(s) 101, etc.) decode the signal(s), and provide the decoded data to the electrical bus. As another example, the communication circuitry 256 may receive one or more signals from the electrical bus, encode the signal(s), and communicate the encoded signal(s) to an external device.

In some examples, the processing circuitry 254 may comprise one or more processors and/or drivers. In some examples, the processing circuitry 254 may be configured to execute machine readable instructions stored in the memory circuitry 252. In the example of FIG. 2, the memory circuitry 252 includes (and/or stores) a torch tracking program 400. In some examples, the torch tracking program 400 may comprise machine readable instructions configured for execution by the processing circuitry 254. In some examples, the torch tracking program 400 may be implemented via discrete circuitry (e.g., of the processing circuitry 254) rather than, or in addition to, being part of (and/or stored in) the memory circuitry 252.

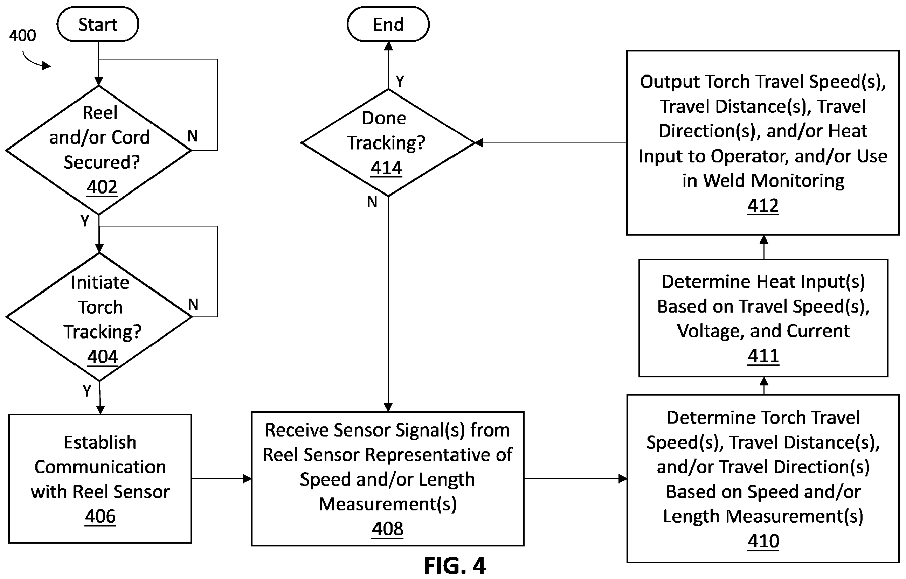

FIG. 4 is a flowchart illustrating operation of an example torch tracking program 400. In some examples, the torch tracking program 400 may be initiated via an operator 108, such as through one or more inputs to the UI 260 of the welding helmet 150, the welding torch 104, and/or the operator interface 130 of the welding equipment 102. As shown, the torch tracking program 400 begins at block 402, where the torch tracking program 400 confirms that the reel 202 and/or at least one end 208 of the cord 204 are secured (e.g., to the welding torch 104, workpiece 112, and/or a fixture). In some examples, the torch tracking program 400 may prompt the operator 108 to manually confirm the reel 202 and/or cord 204 are secured, such as via the UI 260. In some examples, the operator 108 may provide input confirming the reel 202 and/or cord 204 are secured via the UI 260. As shown, block 402 repeats until confirmation is received.

In the example of FIG. 4, the torch tracking program 400 proceeds to block 404 after block 402 once confirmation is received that the reel 202 and/or cord 204 are secured. At block 404, the torch tracking program 400 confirms that the operator 108 wishes to initiate tracking of the welding torch 104. In some examples, the torch tracking program 400 may prompt the operator 108 to confirm that the operator 108 wishes to initiate tracking via UI 260. In some examples, the operator 108 may provide input confirming the reel 202 and/or cord 204 are secured via the UI 260. As shown, block 404 repeats until confirmation is received.

In some examples, a calibration of the torch tracking program 400 and/or reel(s) 202 may be performed at block 404. For example, the torch tracking program 400 may be informed of the position(s) of the reel(s) 202, the relative position(s) of the reel(s) 202 with respect to the welding torch 104 (and/or other reels 202), an initial starting length of the cord(s) 204, an initial rotation of the spool(s) 206, and/or other appropriate information. As another example, the sensor(s) 214 of the reel(s) 202 may be tared, commanded to consider the currently measured length or rotation to be zero, and/or commanded to consider a predetermined length/rotation as zero. In some examples, the calibration(s) may assist the sensor(s) 214 in providing tailored information, and assist the torch tracking program 400 in better understand and/or interpret the information provided by the sensor(s) 214.

In some examples, a calibration of a welding operation may also be performed at block 404. For example, the operator 108 may configure the welding equipment (e.g., via the operator interface 130) to operate using one or more welding parameters (e.g., wire feed speed, wire type, wire size, gas type, gas flow rate, welding process, type of welding torch 104, target voltage, target current, etc.). In some examples, the operator 108 may inform the tracking system 200 of one or more of the welding parameters (e.g., via the UI 260). In some examples, the welding equipment 102 may inform the tracking system 200 of one or more of the parameters to be used for the welding operation (e.g., via communication circuitry 124/256).

In some examples, the torch tracking program 400 may determine a target travel speed, target travel direction, and/or target tension based on the one or more welding parameters. For example, the memory circuitry 252 may store one or more data structures (e.g., linked list, database, look up table, etc.) associating one or more of the one or more welding parameters with a target travel speed, target travel direction, and/or target tension. As another example, the torch tracking program 400 may use a (e.g., stored) algorithm to dynamically determine the target travel speed, target travel direction, and/or target tension. In some examples, the operator may manually enter (e.g., via UI 260) the target travel speed, target travel direction, and/or target tension.

In the example of FIG. 4, the torch tracking program 400 proceeds to block 406 after block 404 once confirmation is received that the operator 108 wishes to initiate tracking of the welding torch 104. At block 406, the torch tracking program 400 establishes communication with the reel sensor(s) 214 and/or spool motor 209 (e.g., via communication circuitry 256). In some examples, this may entail a pairing protocol or the like to establish communication between communication circuitry of the reel sensor(s) 214 and/or spool motor 209, and communication circuitry 256 of the tracking station 250.

In the example of FIG. 4, the torch tracking program 400 proceeds to block 408 after block 406. At block 408, the torch tracking program 400 receives one or more sensor signals representative of the measured speed(s) and/or length(s) from the reel sensor(s) 214. In some examples, the one or more sensor signals may also (or instead) be representative of other measurements (e.g., current, voltage, tension, magnetic field, light, acceleration, angle, etc.). In some examples, the one or more sensor signals may be decoded and/or translated after receipt. As shown, the torch tracking program 400 then proceeds to block 410 where one or more travel speeds, travel distances, and/or travel directions are determined based on the speed and/or length (and/or other) measurement(s) of the reel sensor(s) 214.

For example, the torch tracking program 400 may determine a travel speed, travel direction, and travel distance of the welding torch 104 relative to the reel 202 using two (or more) length measurements and the times at which the length measurements were made. The change in length may provide both the travel distance and the travel direction, with a negative value translating to travel towards to the reel 202, and a positive value translating to travel away from the reel 202. The change in length measurement divided by the change in time would be the travel speed.

In some examples, the torch tracking program 400 may determine a travel speed, travel direction, and travel distance using a rotational speed of the spool 206 as measured by the sensor 214, along with a known size (e.g., radius and/or diameter) of the spool 206. For example, the rotational speed may be translated into a number (and/or fraction) of rotations over a period of time, and those number of rotations may be translated into a length and/or distance using the known size of the spool 206 (e.g., where 1 rotation = 2*pi*radius). In some examples, the rotational speed communicated by the reel sensor(s) 214 may also indicate direction, such as, for example, where a positive speed translates to a first direction (e.g., a retraction direction), and a negative speed translates to a second (e.g., opposite) direction.

In some examples, the sensor signal(s) output by the reel sensor(s) 214 may include the size of the spool 206. In some examples, the size of the spool 206 may be saved in memory circuitry 252. In examples where multiple reels 202 are used, the torch tracking program 400 may additionally determine other information pertaining to the torch 104 at block 410, such as, for example position and/or orientation of the torch 104.

In some examples, at block 410, the torch tracking program 400 may additionally compare the measured and/or determined travel speed/direction of the welding torch 104 with the target travel speed/direction (e.g., input or determined at block 404). In some examples, at block 410, the torch tracking program 400 may determine a difference, if any, between the measured/determined travel speed/direction and the target travel speed/direction. In some examples, at block 410, the torch tracking program 400 may determine a difference, if any, between the measured tension and the target tension.

In the example of FIG. 4, the torch tracking program 400 proceeds to block 411 after block 410. At block 411, the torch tracking program 400 uses the travel speed(s) determined at block 410 to determine one or more heat inputs. In some examples, heat input may be determined based on travel speed, voltage, and current (e.g., [60*current*voltage] / [1000*travel speed]). In some examples, the torch tracking program 400 may obtain the voltage and/or current via one or more sensors 214 of the reel 202, one or more sensors of the torch 104, one or more sensors of the control circuitry 126 of the welding equipment 102, and/or one or more stored default values. In some examples, the torch tracking program 400 may compare and/or determine a difference between the measure/determined heat input and a target heat input (e.g., determined based on the target travel speed and welding parameters).

In the example of FIG. 4, the torch tracking program 400 proceeds to block 412 after block 411. At block 412, the torch tracking program 400 uses the travel speed(s), travel distance(s), travel direction(s), position(s), orientation(s), and/or heat input(s) determined at block 410. In some examples, the torch tracking program 400 may use the speed(s), distance(s), direction(s), position(s), orientation(s), and/or heat input(s) to provide feedback to the operator 108. For example, the torch tracking program 400 may provide outputs representative of these values to the operator 108 via the UI 260. In some examples, the torch tracking program 400 may determine and/or provide outputs representative of average, minimum, and/or maximum values (e.g., since tracking began at block 404) for the determined travel speed(s), travel distance(s), travel direction(s), position(s), orientation(s), and/or heat input(s).

In some examples, the torch tracking program 400 may additionally provide guidance to the operator 108 as to whether a change in technique is warranted given the determined values and/or one or more expected, threshold, and/or target values. In some examples, the torch tracking program 400 may provide feedback to the operator 108 (and/or others nearby) via the stack light 199. For example, the torch tracking program 400 may send one or more signals to the stack light 199 to indicate which light(s) should be illuminated (and/or how they should be illuminated) based on the determined values and/or one or more expected, threshold, and/or target values.

In some examples, the torch tracking program 400 may provide guidance and/or feedback via the spool motor(s) 209. For example, the torch tracking program 400 may determine a difference between the target and measured/determined travel speed, travel direction, tension, and/or heat input, and send one or more command signals to the spool motor(s) 209 to increase/decrease the rotational force applied to the spool(s) 206 based on the difference. The increase/decreased rotational force applied to the spool(s) 206 may translate into an increased/decreased tension on the cord(s) 204, and/or an increased/decreased force on the welding torch 104. The increased/decreased tension in the cord(s) 204 and/or force on the welding torch 104 caused by the spool motor(s) 209 may serve as feedback, encouraging the operator 108 to go slower/faster to get closer to the target travel speed/direction.

In some examples, the torch tracking program 400 may record the determined travel speed(s), direction(s), distance(s), and/or heat input(s) (e.g., in memory circuitry 252) as part of a larger weld monitoring system. For example, the welding helmet 150, welding-type power supply 118, remote server(s) 101, and/or tracking station 250 (along with other sensors and/or devices) may implement a weld monitoring system that monitors the operator 108 and/or welds performed by the operator 108 for quality assurance, training, statistical analysis, and/or other purposes. In some examples, the weld monitoring system may use the determined travel speed(s), direction(s), distance(s), and/or heat input(s) (and/or position(s)/orientation(s)) to further its quality assurance, training, statistical analysis, and/or other purposes.

In the example of FIG. 4, the torch tracking program 400 proceeds to block 414 after block 412. At block 414, the torch tracking program 400 determines whether tracking of the torch 104 should continue. In some examples, this determination may be based on input from the operator 108. For example, the operator 108 my provide one or more inputs via the torch 104, welding helmet 150, and/or welding-type power supply 118 to indicate that the torch tracking program 400 should cease (or continue). If the torch tracking program 400 determines that tracking should continue, the torch tracking program 400 returns to block 408. If the torch tracking program 400 determines that tracking of the torch 104 should not continue, the torch tracking program 400 ends after block 414.

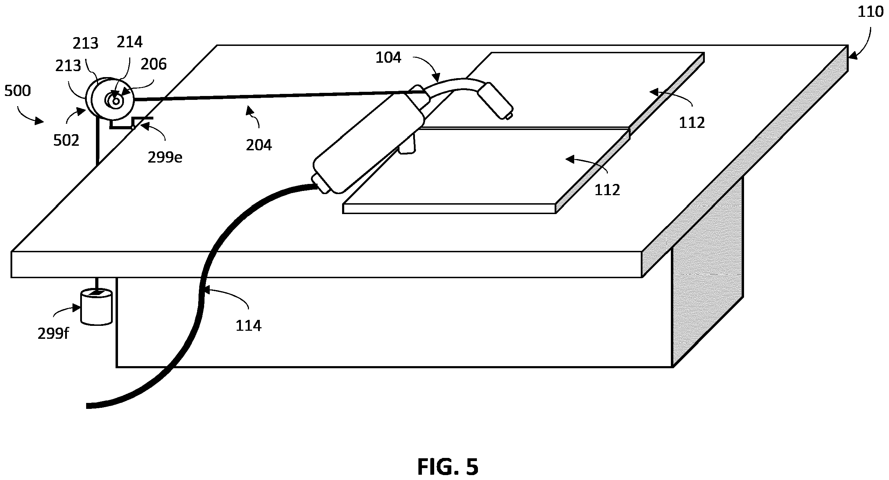

FIG. 5 shows an example of an alternative reel 502 used as part of a pulley system 500. As shown, the pulley system 500 includes the reel 502, a reel attachment weight 299f, and a cord 204 attached to the reel attachment weight 299f and a welding torch 104. The reel 502 is secured to an edge of the welding bench 110 by a reel attachment clamp 299e, and the cord is strung over the reel 502. In the example of FIG. 5, the reel 502 hangs off the edge of the welding bench 110 such that the reel attachment weight 299f can hang from the reel 502 by the cord 204.

In some examples, the reel attachment weight 299f may serve a similar purpose in the pulley system 500 as the spring loaded spool 206 serves in the reel 502. In particular, the weight 299f (and the force of gravity on the weight 299f) may create a tension in the cord 204 (as long as the weight 299f remains above the floor). The tension in the cord 204, the attachment of the cord 204 to the welding torch 104, and the arrangement of the cord 204 strung over the reel 502, as shown, ensure that as the welding torch 104 moves, the cord 204 will move, and as the cord moves, the pulley reel 502 will rotate, allowing for detection of travel speed, distance, and/or direction.

In the example of FIG. 5, the reel 502 includes two flanges 213 connected via a spool 206, similar to the reel 202. However, the cord 204 only extends over the spool 206 rather than coiling onto the spool 206, as in the reel 202. In some examples, the spool 206 may also not be spring loaded, and instead rely on the weight 299f to maintain a tension in the cord 204.

In the example of FIG. 5, the reel 502 does include a sensor 214 attached to the spool 206, like the reel 202. In some examples, the sensor 214 may be otherwise positioned. In some examples, the reel 502 may also include sensors 214 on the flanges 213 and/or other parts of the reel 502 (though these are not shown, due to the viewpoint). As discussed above, in some examples, the sensors 214 may be configured to measure a tension in/of the cord 204, a voltage/current across/through the cord 214, how much and/or how fast cord 204 is extended from and/or retracted onto the spool 206, and/or other properties of the reel 202 and/or cord 204 (e.g., rotational speed of spool 206). In some examples, the pulley reel 502 and its associated pulley system 500 may be used in place of the reel 202 in the torch tracking system 200 (and/or configurations shown in FIGS. 3a-3g), to serve as an even simpler way to measure travel speed/direction/distance and/or heat input.

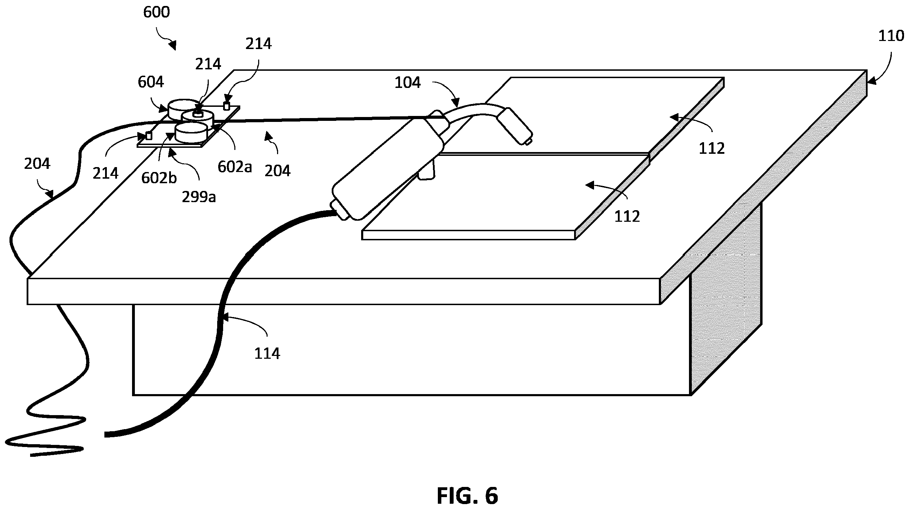

FIG. 6 shows an example of a drive roll system 600 that might be used instead of, or in addition to, the reel(s) 202/502 (e.g., in the torch tracking system 200 and/or configurations shown in FIGS. 3a-3g). As shown, the drive roll system 600 includes a first drive roll 602a and a second drive roll 602b. A drive roll motor 604 is in contact with the first drive roll 602a and is configured to apply a rotational force to the first drive roll 602a, to turn the first drive roll 602a. While only one drive roll motor 604 is shown in the example of FIG. 6, in some examples, the drive roll system 600 may include a second drive roll motor in contact with the second drive roll 602b. In some examples, the drive roll motor 604 may have similar capabilities and/or functions as that of the spool motor 209 of the reel 202 (albeit without the spool 206). As shown, the drive roll system 600 is secured to the welding table 110 via reel attachment 299a.

In the example of FIG. 6, the cord 204 is sandwiched between the two drive rolls 602. In such an arrangement, the drive rolls 602 may impart a frictional force on the cord 204. Thus, the rotational force imparted unto the drive roll(s) 602 by the drive roll motor 604 may be translated into a lateral (and/or tangential) force on the cord 204, driving the cord 204 towards or away from the welding torch 104 (depending on the direction the drive rolls 602 turn).

In some examples, the drive roll motor 604 may be configured to dynamically adjust the force on the cord 204 (and/or on the drive roll(s) 602) in response to one or more signals (e.g., similar to the spool motor 209). In some examples, the drive roll system 600 may comprise communication circuitry to enable the drive roll motor 604 to receive the one or more signals.

In the example of FIG. 6, the drive roll system 600 further includes several sensors 214. Similar to that which is discussed above, in some examples, the sensors 214 may be configured to measure a tension in/of the cord 204, a voltage/current across/through the cord 214, how much and/or how fast the cord 204 moves through the drive roll system 600, and/or other properties of the drive roll system 600 and/or cord 204. In some examples, the sensor(s) 214 and/or tracking station 250 may send one or more signals representative of their measurement(s) and/or determination(s) to the drive roll motor 604. In some examples, the drive roll motor 604 may dynamically adjust the force on the cord 204 (and/or on the drive roll(s) 602) in response to the signal(s), such as, for example, to provide feedback and/or maintain a tension in the cord 204.

By measuring a length of cord 204 of that is extended and/or retracted by a reel 202 (and/or drive roll system 600), and/or a speed which the cord 204 is extended and/or retracted by the reel 202 (and/or drive roll system 600), a travel direction, travel distance, and/or travel speed of a welding torch 104 may be easily monitored. This monitored travel direction, travel distance, and/or travel speed may be used to determine heat input, used to give an operator immediate feedback as to their welding technique, stored for future analysis, and/or used as part of a larger weld monitoring system. While the measurements of the reel 202 (and/or drive roll system 600) may be somewhat coarse, and the resulting travel direction, travel distance, and/or travel speed similarly approximate, the cost to implement torch tracking via the reel 202 (and/or drive roll system 600) is much lower than other solutions, and relatively easy to implement.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

Certain embodiments are set out in the following numbered clauses:
1. A weld monitoring system, comprising:
   a reel configured to extend and retract a cord that is spooled on the reel;
   a sensor configured to measure a speed at which the cord is extended or retracted, or a length of the cord that is extended or retracted; and
   control circuitry configured to determine a travel speed, travel direction, or travel distance of a welding tool that is coupled to the reel or the cord based on the speed or length measured by the sensor.
2. The weld monitoring system of clause 1, wherein the reel or an end of the cord comprises a weight configured to anchor the reel or the end of the cord.
3. The weld monitoring system of clause 1, wherein the reel or an end of the cord comprises a coupler configured to secure the reel or the end of the cord to a workpiece, a fixture, or the welding torch.
4. The weld monitoring system of clause 3, wherein the coupler comprises a magnet, clip, clasp, clamp, bracket, hook and loop fastener, screw, bolt, nail, strap, or a hole.
5. The weld monitoring system of clause 1, wherein the sensor comprises a gyroscope, accelerometer, potentiometer, encoder, magnetic sensor, or optical sensor.
6. The weld monitoring system of clause 1, wherein the welding tool comprises a welding gun, welding torch, or electrode holder.
7. The weld monitoring system of clause 1, further comprising a user interface (UI) configured to provide an output indicative of the travel speed, travel direction, or travel distance.
8. The weld monitoring system of clause 7, further comprising a welding helmet, wherein the welding helmet comprises the control circuitry, the UI, and communication circuitry configured to receive a signal from the sensor indicative of the speed or length.
9. The weld monitoring system of clause 1, wherein the control circuitry is further configured to determine a heat input based on the travel speed.
10. The weld monitoring system of clause 1, wherein the cord is a welding cable that connects the welding tool to a welding-type power supply, wire feeder, or gas supply.
11. A method of monitoring a travel speed, travel direction, or travel distance of a welding tool, the method comprising:
   measuring a speed at which a cord is extended or retracted by a reel, or a length of the cord that is extended or retracted, via a sensor;
   determining, via control circuitry, a travel speed, travel direction, or travel distance of the welding tool based on the speed or length measured by the sensor, the welding tool being coupled to the reel or the cord.
12. The method of clause 11, wherein the reel or an end of the cord comprises a weight configured to anchor the reel or the end of the cord.
13. The method of clause 11, wherein the reel or an end of the cord comprises a coupler configured to secure the reel or the end of the cord to a workpiece, a fixture, or the welding torch.
14. The method of clause 13, wherein the coupler comprises a magnet, clip, clasp, clamp, bracket, hook and loop fastener, screw, bolt, nail, strap, or a hole.
15. The method of clause 11, wherein the sensor comprises a gyroscope, accelerometer, potentiometer, encoder, magnetic sensor, or optical sensor.
16. The method of clause 11, wherein the welding tool comprises a welding gun, welding torch, or electrode holder.
17. The method of clause 11, further comprising providing an output indicative of the travel speed, travel direction, or travel distance via a user interface (UI).
18. The method of clause 17, further comprising receiving, via communication circuitry of a welding helmet, a signal from the sensor indicative of the speed or length, wherein the welding helmet also comprises the control circuitry and the UI.
19. The method of clause 11, wherein the control circuitry is further configured to determine a heat input based on the travel speed.
20. The method of clause 11, wherein the cord is a welding cable that connects the welding tool to a welding-type power supply, wire feeder, or gas supply.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type power refers to power suitable for welding, cladding, brazing, plasma cutting, induction heating, carbon arc cutting, and/or hot wire welding/preheating (including laser welding and laser cladding), carbon arc cutting or gouging, and/or resistive preheating.

As used herein, a welding-type power supply and/or power source refers to any device capable of, when power is applied thereto, supplying welding, cladding, brazing, plasma cutting, induction heating, laser (including laser welding, laser hybrid, and laser cladding), carbon arc cutting or gouging, and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

## Claims

1. A weld monitoring system, comprising:
a reel configured to extend and retract a cord that is spooled on the reel;
a sensor configured to measure a speed at which the cord is extended or retracted, or a length of the cord that is extended or retracted; and
control circuitry configured to determine a travel speed, travel direction, or travel distance of a welding tool that is coupled to the reel or the cord based on the speed or length measured by the sensor.

2. The weld monitoring system of claim 1, wherein the reel or an end of the cord comprises a weight configured to anchor the reel or the end of the cord.

3. The weld monitoring system of claim 1, wherein the reel or an end of the cord comprises a coupler configured to secure the reel or the end of the cord to a workpiece, a fixture, or the welding torch, and optionally wherein the coupler comprises a magnet, clip, clasp, clamp, bracket, hook and loop fastener, screw, bolt, nail, strap, or a hole.

4. The weld monitoring system of claim 1, wherein the sensor comprises a gyroscope, accelerometer, potentiometer, encoder, magnetic sensor, or optical sensor.

5. The weld monitoring system of claim 1, wherein the welding tool comprises a welding gun, welding torch, or electrode holder.

6. The weld monitoring system of claim 1, further comprising a user interface (UI) configured to provide an output indicative of the travel speed, travel direction, or travel distance, and optionally further comprising a welding helmet, wherein the welding helmet comprises the control circuitry, the UI, and communication circuitry configured to receive a signal from the sensor indicative of the speed or length.

7. The weld monitoring system of claim 1, wherein the control circuitry is further configured to determine a heat input based on the travel speed.

8. The weld monitoring system of claim 1, wherein the cord is a welding cable that connects the welding tool to a welding-type power supply, wire feeder, or gas supply.

9. A method of monitoring a travel speed, travel direction, or travel distance of a welding tool, the method comprising:
measuring a speed at which a cord is extended or retracted by a reel, or a length of the cord that is extended or retracted, via a sensor;
determining, via control circuitry, a travel speed, travel direction, or travel distance of the welding tool based on the speed or length measured by the sensor, the welding tool being coupled to the reel or the cord.

10. The method of claim 9, wherein the reel or an end of the cord comprises a weight configured to anchor the reel or the end of the cord.

11. The method of claim 9, wherein the reel or an end of the cord comprises a coupler configured to secure the reel or the end of the cord to a workpiece, a fixture, or the welding torch and optionally wherein the coupler comprises a magnet, clip, clasp, clamp, bracket, hook and loop fastener, screw, bolt, nail, strap, or a hole.

12. The method of claim 9, wherein the sensor comprises a gyroscope, accelerometer, potentiometer, encoder, magnetic sensor, or optical sensor.

13. The method of claim 9, wherein the welding tool comprises a welding gun, welding torch, or electrode holder.

14. The method of claim 9, further comprising providing an output indicative of the travel speed, travel direction, or travel distance via a user interface (UI) and optionally further comprising receiving, via communication circuitry of a welding helmet, a signal from the sensor indicative of the speed or length, wherein the welding helmet also comprises the control circuitry and the UI.

15. The method of claim 9, wherein the control circuitry is further configured to determine a heat input based on the travel speed.

16. The method of claim 9, wherein the cord is a welding cable that connects the welding tool to a welding-type power supply, wire feeder, or gas supply.
